# EUROPEAN PATENT SPECIFICATION

(11) **EP 3 985 617 B1**
(45) Date of publication and mention of the grant of the patent: **08.04.2026**
(21) Application number: 21203159.5
(22) Date of filing: 18.10.2021
(51) Int. Cl.: G06V 10/143, G06V 20/59

(54) **PIR OCCUPANCY ESTIMATION SYSTEM**
SYSTEM ZUR SCHÄTZUNG DER PIR-BELEGUNG
SYSTÈME D'ESTIMATION D'OCCUPATION PIR

(30) Priority: 19.10.2020 US 202063093533 P
(43) Date of publication of application: 20.04.2022
(73) Proprietor: Delta Intelligent Building Technologies (Canada) Inc., Surrey, British Columbia V3S 1C7 (CA)
(72) Inventor: De Vaz, Dmitri Jude, Surrey, BC, V4N 6R3 (CA); Kwong, Robert Christopher, Coquitlam, BC, V3J 2P8 (CA); Mustapha, Gamal Kazim, Surrey, BC, V4P 3G4 (CA)
(74) Representative: Uexküll & Stolberg

(56) References cited:
- US-A1- 2019 164 297
- NEMA NEMA: "NEMA Standards Publication WD 7-2011 (R2016) Occupancy Motion Sensors Standard", 1 January 2016 (2016-01-01), XP093208366, Retrieved from the Internet <URL:https://webstore.ansi.org/standards/nema/nemawd2011r2016?srsltid=AfmBOopS7xlnDJlWkPf3sbUkYLQifn7DxIxftRQjWvw0njLvFIzVQDNZ>
- JAMES CLAREMARY: "An advanced implementation idea for detecting real-time object occupancy", JOURNAL OF STUDENT RESEARCH, 15 July 2020 (2020-07-15), XP055897491
- ANDREWS JACK ET AL: "A Motion Induced Passive Infrared (PIR) Sensor for Stationary Human Occupancy Detection", 2020 IEEE/ION POSITION, LOCATION AND NAVIGATION SYMPOSIUM (PLANS), IEEE, 20 April 2020 (2020-04-20), pages 1295 - 1304, XP033778740, DOI: 10.1109/PLANS46316.2020.9109909
- LUNBERG KELSEY ET AL: "Vehicle Occupancy Detection System EE 4830 - Senior Design II Final Report", 5 March 2017 (2017-03-05), XP055897495, Retrieved from the Internet <URL:https://mountainscholar.org/bitstream/handle/20.500.11919/1365/STUW_HT_2017_Miller_Wert_Lunberg.pdf?sequence=1> [retrieved on 20220303]

## Description

### FIELD OF THE INVENTION

The present disclosure relates to an occupancy estimation system, and more particularly to a PIR (passive infrared) occupancy estimation system.

### BACKGROUND OF THE INVENTION

An IoT (Internet of Things) connected device may be equipped with multiple integrated sensors used for monitoring and reporting the conditions of an indoor space to the Building Automation System (BAS). One of the most important inputs for control of the BAS is occupancy, as the BAS controls adjust the heating/cooling and airflow based on the occupancy of an indoor space. Knowing details of the occupied space in terms of the level of occupancy provides information related to the thermal load used for fine tuning the control system as well as the ability to provide analytics required for space utilization.

People counting technologies such as visible light cameras, thermal imaging, LIDAR (light detection and ranging), and millimeter wave detection systems are available to detect and count the number of people present in an occupied space. However, these technologies are expensive and as a result are used sparingly and only under unique circumstances.

Therefore, there is a need of providing a PIR occupancy estimation system to obviate the drawbacks encountered from the prior arts. Acknowledged is:
JAMES CLAREMARY: "An advanced implementation idea for detecting real-time object occupancy", JOURNAL OF STUDENT RESEARCH, 15 July 2020 (2020-07-15), XP055897491,
ANDREWS JACK ET AL: "A Motion Induced Passive Infrared (PIR) Sensor for Stationary Human Occupancy Detection",2020 IEEE/ION POSITION, LOCATION AND NAVIGATION SYMPOSIUM (PLANS), IEEE, 20 April 2020 (2020-04-20), pages 1295-1304, XP033778740,DOI: 10.1109/PLANS46316.2020.9109909

### SUMMARY OF THE INVENTION

It is an objective of the present disclosure to provide a PIR occupancy estimation system using a standard low-cost PIR motion sensor to produce an estimation of the number of occupants in a target space. Consequently, the cost is greatly reduced.

In accordance with an aspect of the present disclosure, there is provided an occupancy estimation system. The occupancy estimation system is configured to estimate a number of occupants in a target space. The occupancy estimation system includes a PIR motion sensor and a control apparatus. The PIR motion sensor is with a field of view of an area where occupants are expected to be present, and the PIR motion sensor is adapted to output a PIR signal. The control apparatus is adapted to receive the PIR signal to compile an aggregate of the minor and major motion behaviors of the occupants in the field of view and generate an occupancy estimation count accordingly.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic block diagram illustrating a PIR occupancy estimation system according to an embodiment of the present disclosure;
FIG. 2 is a schematic block diagram showing the algorithm operated by the control apparatus to process the PIR signal;
FIG. 3 and FIG. 4 are schematic diagrams of utilizing the LSP model to process the PIR signal;
FIG. 5 and FIG. 6 are schematic diagrams of utilizing the DWT model to process the PIR signal;
FIG. 7 and FIG. 8 are schematic block diagrams showing variants of the PIR occupancy estimation system of FIG. 1.
FIG. 9 is a schematic flow chart illustrating HVAC application employing the PIR occupancy estimation system; and
FIG. 10 schematically shows additional sensors working in conjunction with the PIR motion sensor.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

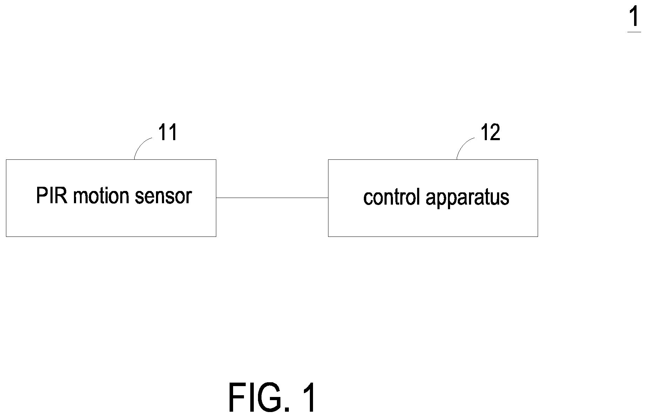

FIG. 1 is a schematic block diagram illustrating a PIR occupancy estimation system according to an embodiment of the present disclosure. As shown in FIG. 1, the PIR occupancy estimation system 1 is configured to estimate a number of occupants in a target space, and the PIR occupancy estimation system 1 includes a PIR motion sensor 11 and a control apparatus 12. Preferably but not exclusively, the target space is an indoor space. The PIR motion sensor 11 is with a field of view of an area where occupants are expected to be present, and the PIR motion sensor 11 is adapted to generate a PIR signal which includes raw PIR data. The control apparatus 12 is adapted to receive the PIR signal outputted by the PIR motion sensor 11 to compile an aggregate of minor and major motion behaviors of the occupants in the field of view and generate an occupancy estimation count accordingly. In one embodiment, the control apparatus 12 is adapted to compile an aggregate of all the minor and major motion behaviors of the occupants in the field of view and generate the occupancy estimation count accordingly. On the other hand, the control apparatus 12 is adapted to generate the occupancy estimation count based on operating an algorithm to process the raw PIR data included by the PIR signal from the PIR motion sensor 11. In an embodiment, the algorithm may be performed by a microcontroller unit (not shown) of the control apparatus 12.

Therefore, the PIR occupancy estimation system 1 of the present disclosure may utilize a standard low-cost PIR motion sensor 11 to produce an estimation of the number of occupants in a target space. Consequently, the cost is greatly reduced.

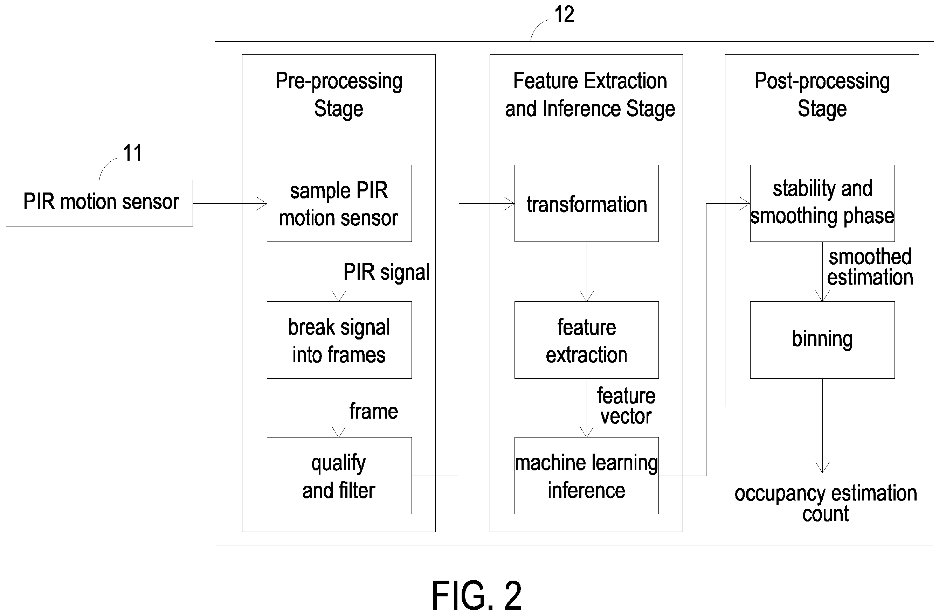

Please refer to FIG. 2. In one embodiment, the algorithm operated to process the PIR signal (i.e., processing the raw PIR data) is divided into three main stages including a pre-processing stage, a features extraction and inference stage, and a post-processing stage.

Firstly, in the pre-processing stage, the PIR signal from the PIR motion sensor 11 is sampled, and the sampling frequency is for example but not limited to 50 Hz. Depending on actual application, a bandpass filter may be utilized to filter the PIR signal to remove unwanted bias and high frequency noise, wherein the bias might be DC bias. The PIR signal is broken into multiple smaller frames, and the frame length is a parameter of the algorithm and is able to be adjusted according to actual requirements. Preferably but not exclusively, the frames are generated with a 50% overlap. The algorithm qualifies and filters the frames for minor motion.

Then, in the feature extraction and inference stage, a transformation, such as a time-frequency transformation (e.g., fast fourier transform (FFT) or discrete wavelet transform (DWT)) or a feature extracting transformation (e.g., random convolutional kernel transform), is performed on the frames. During the transformation, a 1-dimensional time series is transformed into several time series, where each time series has a different bandwidth (i.e., each signal focuses on a different part of the frequency domain). Afterwards, a collection of the frames including the output of the transformation along with the unmodified frames from the pre-processing stage is passed through a feature extraction step. In the features extraction step, several statistical features are extracted from each frame and then concatenated into a 1-dimensional feature vector. The particular features used make a large difference on whether or not the algorithm can decipher the difference between the number of occupants in the target space. The features extracted from each frame includes at least one of a Laplace spread parameter (LSP), a range between the smallest and largest samples in the frame, a zero crossing rate, a mean crossing rate, an entropy, a motion count, percent positive values (ppv), percentiles, and a slope representing the linear trend of the signal, but not limited thereto. Then, the feature vector is passed on to the machine learning (ML) model for inference. The relevant information has been extracted into features that the machine learning model may use to estimate the number of occupants. According to the feature vector, the machine learning model outputs an approximate estimation for the number of occupants.

In an embodiment, during pre-processing stage and the feature extraction and inference stage, the algorithm is adapted to distinguish and characterize the frames between major motion and minor motion, where the major motion is discarded and the minor motion is saved for further processing. Namely, the algorithm extracts the frame where the minor motion detected.

Finally, in the post-processing stage, the algorithm processes the approximate estimations outputted from the machine learning model through a generic temporal stability and smoothing phase to generate smoothed estimations for the number of occupants. For example, in the stability and smoothing phase, the approximate estimations are processed through a low pass filter, a Kalman filter, a hidden Markov model, or a simple state machine to generate the smoothed estimations, but not limited to. Through binning the smoothed estimations, the final occupancy estimation counts are generated accordingly. In an embodiment, a supervisory logic is applied to the approximate or smoothed estimations to eliminate anomalies and edge cases.

Consequently, the PIR occupancy estimation system 1 of the present disclosure processes the PIR signal by using a combination of signal processing and machine learning techniques.

Depending on the environment and types of motion produced by occupants, the algorithm operated by the control apparatus 12 may use different models to process the PIR signal (i.e., process the raw PIR data). The LSP model and the DWT model and the corresponding processing steps are exemplified as follows.

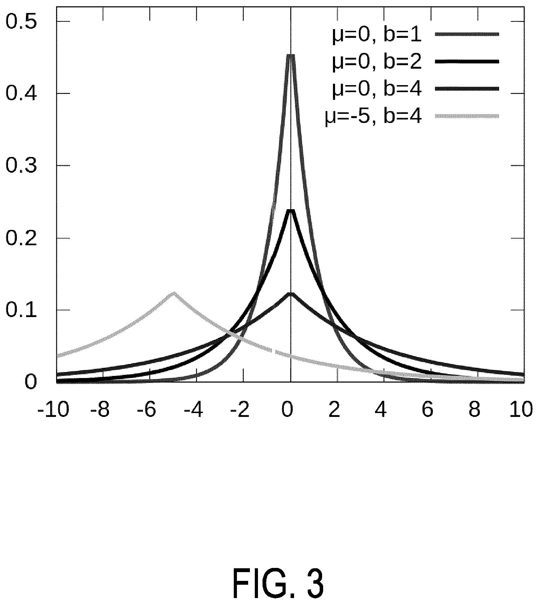

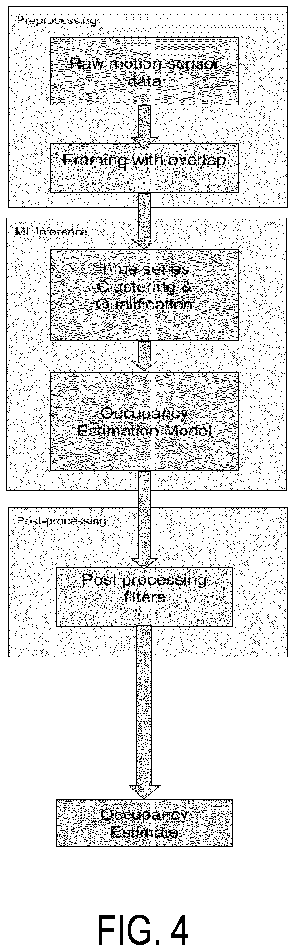

Please refer to FIG. 3 and FIG. 4. As shown in FIG. 3, the LSP model works by combining a DSP (digital signal processing) pipeline to remove noise before qualifying and statistically modeling the distribution of key parameters. Modeling the signal using a Laplace distribution is configured for making this model work correctly. As shown in FIG. 4, when the LSP model is applied, the following steps are performed to process the PIR signal:
1. A bandpass filter is applied to the PIR signal (analog data) from the PIR motion sensor 11 in order to remove unwanted DC bias and high frequency noise;
2. The signal outputted by the bandpass filter is windowed and framed with 50% overlap;
3. Each frame is analyzed by an unsupervised/clustering machine learning model to distinguish between major motion and minor motion;
4. The major motion is discarded, and the minor motion is fed to a model to calculate the Laplace spread parameter (LSP);
5. The resulting LSP is then passed through a low pass filter to increase stability, wherein the LSP is fed to a machine learning model to get an approximate estimation for the number of occupants;
6. A supervisory logic is applied to the approximate estimations to identify and eliminate anomalies and edge cases; and
7. The final occupancy count estimation is then allocated to an occupancy group and is ready for use by the BAS.

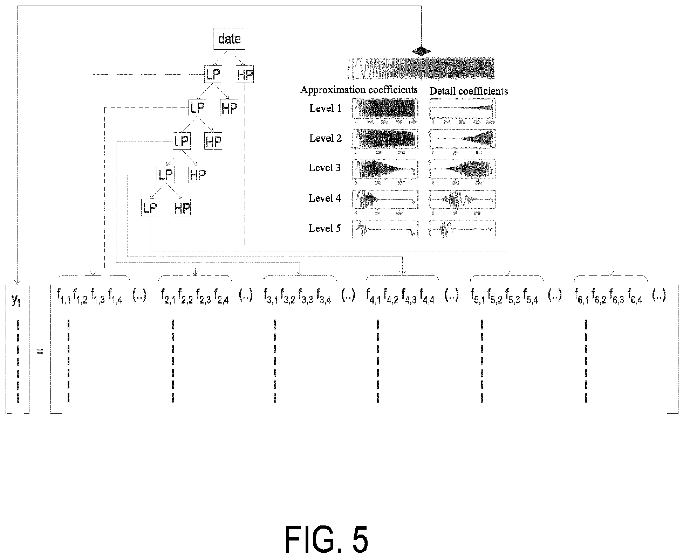

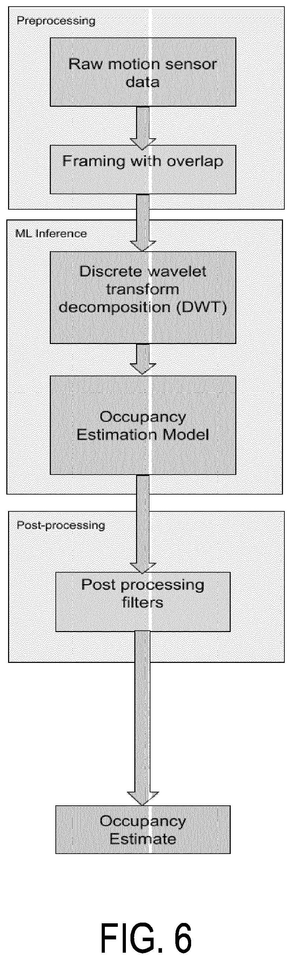

Please refer to FIG. 5 and FIG. 6. FIG. 5 schematically shows the architecture of the DWT model. As shown in FIG. 6, when the DWT model is applied, the following steps are performed to process the PIR signal:
1. A bandpass filter is applied to the PIR signal (analog data) from the PIR motion sensor 11 in order to remove unwanted DC bias and high frequency noise;
2. The signal outputted by the bandpass filter is windowed and framed with 50% overlap;
3. A discrete wavelet transform (DWT) is applied to the filtered signal where it is passed through a bank of filters with carefully chosen cut-off frequencies;
4. The result of the DWT is several signals of varying bandwidths. Basic statistics are pulled out of each feature and concatenated into a feature vector;
5. The feature vector is than passed to the machine learning model to generate a candidate occupancy count;
6. The resulting candidate occupancy count is passed through a low pass filter to increase stability;
7. The filtered occupancy count is post-processed using the time history of previous generated occupancy counts; and
8. The final occupancy count estimation is then allocated to an occupancy group and is ready for use by the BAS.

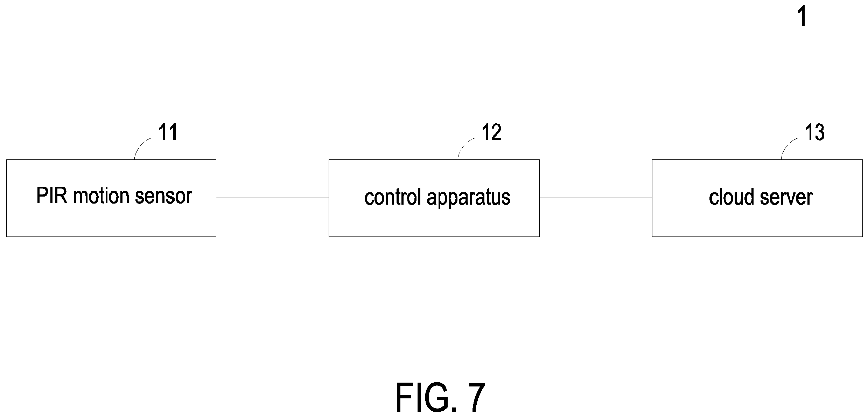

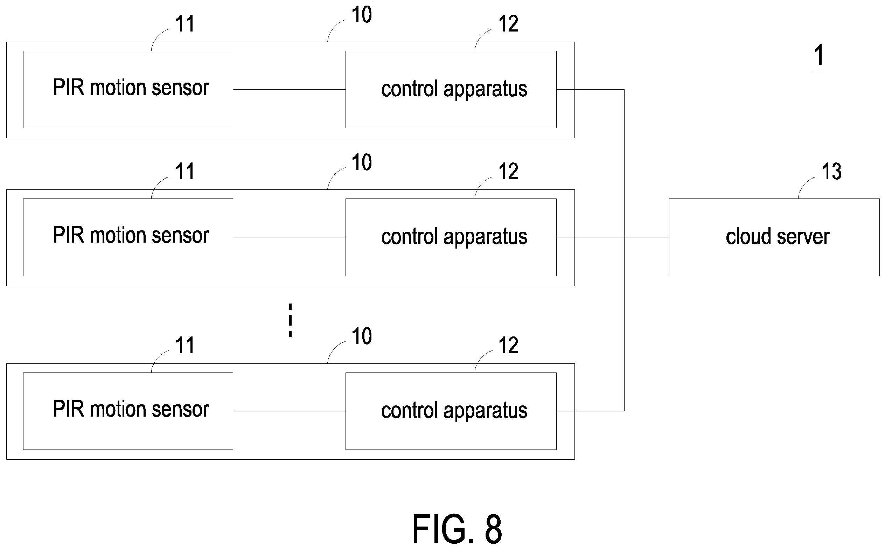

In an embodiment, as shown in FIG. 7, the PIR occupancy estimation system 1 further includes a cloud server 13 adapted to store the data, and the control apparatus 12 includes a transceiver (not shown) corresponding. The transceiver is in communication with the cloud server 13, and is configured to transmit the data or signals to the data collection server or to receive the data or signals stored in the data collection server. In an embodiment, as shown in FIG. 8, the PIR motion sensor 11 and the control apparatus 12 form an occupancy estimation unit 10, and the PIR occupancy estimation system 1 may include a plurality of said occupancy estimation units 10 all in communication with the cloud server 13. Therefore, the plurality of occupancy estimation units 10 may be used to estimate the number of occupants in plural target spaces, and the operation of occupancy estimation units 10 may be monitored and controlled through the cloud server 13.

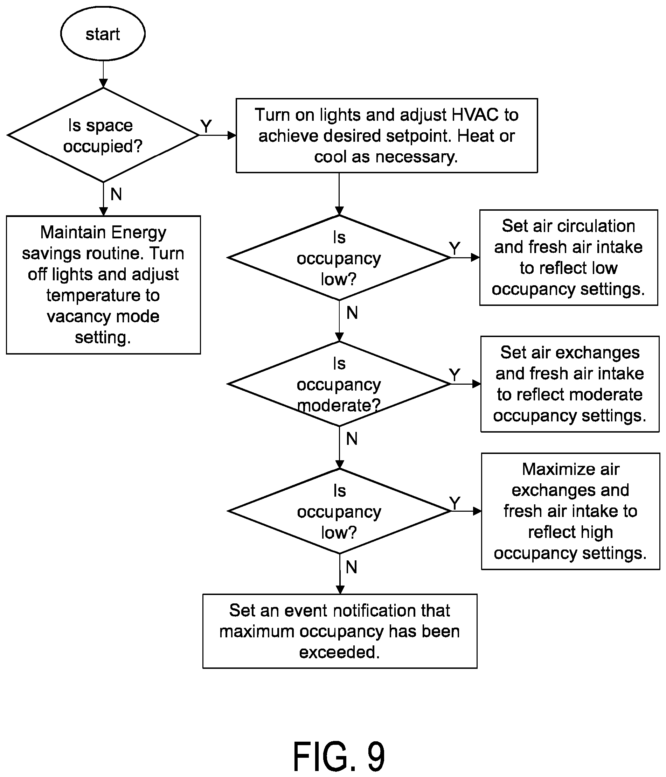

The PIR occupancy estimation system 1 of the present disclosure may be applied in applications like space utilization analytics, monitoring and controlling occupancy in an indoor space and optimizing HVAC (heating, ventilation and air conditioning) control/energy, but not limited thereto. Taking HVAC applications as an example, FIG. 9 shows the corresponding flow chart. Based on the number of occupants from the PIR occupancy estimation system 1, the HVAC system may be manipulated by the controller thereof to maximize energy efficiency and maintain optimal occupant comfort. It is noted that the steps in the flow chart of FIG. 9 are performed by the controller of the HVAC system. As shown in FIG. 9, firstly, whether the target space is occupied is determined. If the target space is not occupied, the energy savings routine is maintained. In particular, the lights are turned off, and the temperature is adjusted to vacancy mode setting. Whereas, if the target space is occupied, the lights are turned on, the HVAC system is adjusted to achieve desired setpoint, and heating or cooling is taken as necessary. Afterwards, the level of the occupancy is determined through judging whether the occupancy is low, moderate or high, so as to manipulate the HVAC system accordingly. If the occupancy is low, the air circulation and fresh air intake are set to reflect low occupancy settings. If the occupancy is moderate, the air exchanges and fresh air intake are set to reflect moderate occupancy settings. If the occupancy is high, the air exchanges and fresh air intake are maximized to reflect high occupancy settings. The low, moderate, and high occupancy settings depend on the size and air volume capacity of the target space. Further, if the results of judging whether the occupancy is low, moderate or high are all not satisfied, an event notification that maximum occupancy has been exceeded is set. In addition, room utilization is able to be recorded over time, and the HVAC system is able to predict settings and pre-heat/pre-cool prior to utilization, and the room utilization tracking and reporting are also useful for optimizing building performance.

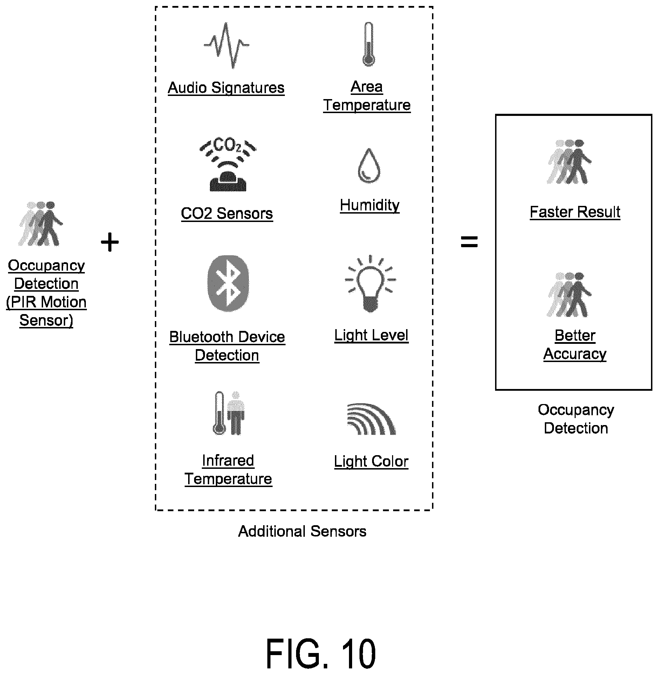

In an embodiment, the PIR occupancy estimation system 1 includes a plurality of said PIR motion sensors 11 to refine and/or enhance the readings recorded by the motion sensors. As an example, the adjacent distributed PIR motion sensors are utilized to detect motion coming or leaving other spaces. Further, in an embodiment, as shown in FIG. 10, in addition to the PIR motion sensor, the PIR occupancy estimation system 1 further includes various kinds of additional sensors to realize sensor fusion. Correspondingly, the PIR occupancy estimation system 1 may further include a sensor hub (not shown) for processing signals from the sensors. The additional sensors both housed within the same device or from other devices on the same network are able to work together with the PIR motion sensor to produce a more rapid and more accurate occupancy estimate count of the target space. For example, the additional sensors includes at least one of an audio sensor, a CO2 sensor, a Bluetooth device sensor, an infrared temperature sensor, an area temperature sensor, a humidity sensor, a light level sensor, and a light color sensor, but not limited thereto. The audio sensor is adapted to detect the audio signatures reflecting the amount of noise above normal noise floor, which is an indication of people. The CO2 sensor is adapted to detect people based on CO2 level. The Bluetooth device sensor is adapted to detect number of Bluetooth devices. The infrared temperature sensor is adapted to detect thermal loads from people. Consequently, the additional sensors is adapted to give a different aspect of occupancy under specific circumstances, and these additional sensors working in conjunction with the PIR motion sensor would improve the occupancy detection speed and accuracy.

From the above descriptions, the present disclosure provides a PIR occupancy estimation system using a standard low-cost PIR motion sensor to produce an estimation of the number of occupants in a target space. This is made possible by processing the PIR signal using a combination of signal processing and machine learning techniques. Consequently, the cost is greatly reduced.

## Claims

1. A PIR (passive infrared)
occupancy estimation system (1), configured to estimate a number of occupants in a target space, and **characterized by** comprising:
a PIR motion sensor (11) with a field of view of an area where occupants are expected to be present, and adapted to output a PIR signal; and
a control apparatus (12) adapted to receive the PIR signal to compile an aggregate of the minor and major motion behaviors of the occupants in the field of view and generate an occupancy estimation count according to the minor motion behavior,
wherein the control apparatus (12) is adapted to operate an algorithm to process the PIR signal from the PIR motion sensor (11), and the algorithm is adapted to break the PIR signal into a plurality of frames and perform a transformation, comprising a time-frequency transformation or a feature extracting transformation, on the plurality of frames,
wherein the control apparatus (12) is adapted to analyze each of the plurality of frames by an unsupervised/clustering machine learning model of the algorithm to distinguish between the minor and major motion behaviors, wherein the major motion behavior is discarded.

2. The PIR occupancy estimation system (1) according to claim 1, wherein the algorithm is adapted to utilize a bandpass filter to filter the PIR signal to remove unwanted bias and high frequency noise.

3. The PIR occupancy estimation system (1) according to claim 1, wherein the plurality of frames are generated with a 50% overlap.

4. The PIR occupancy estimation system (1) according to claim 1, wherein according to the plurality of frames and an output of the transformation for each of the plurality of frames, the algorithm is adapted to extract statistical features from each of the plurality of frames and concatenate the statistical features into a feature vector.

5. The PIR occupancy estimation system (1) according to claim 4, wherein the statistical features comprise at least one of a Laplace spread parameter, a range between the smallest and largest samples in the frame, a zero crossing rate, a mean crossing rate, an entropy, a motion count, percent positive values, percentiles, and a slope.

6. The PIR occupancy estimation system (1) according to claim 4, wherein the algorithm is adapted to distinguish and characterize the plurality of frames between the major and the minor motion behaviors and extract the frame where the minor motion behaviors detected.

7. The PIR occupancy estimation system (1) according to claim 4, wherein according to the feature vector, the algorithm is adapted to utilize a machine learning model to estimate the number of occupants in the target space and generate an approximate estimation.

8. The PIR occupancy estimation system (1) according to claim 7, wherein the algorithm is adapted to process the approximate estimations from the machine learning model through a stability and smoothing phase to generate smoothed estimations and generate the occupancy estimation count through binning the smoothed estimations.

9. The PIR occupancy estimation system (1) according to claim 8, wherein the algorithm is adapted to apply a supervisory logic to the approximate or smoothed estimations to eliminate anomalies and edge cases.

10. The PIR occupancy estimation system (1) according to claim 1, further comprising a cloud server (13) adapted to store data, wherein the control apparatus (12) comprises a transceiver in communication with the cloud server (13).

11. The PIR occupancy estimation system (1) according to claim 10, wherein the PIR motion sensor (11) and the control apparatus (12) form an occupancy estimation unit (10), and the PIR occupancy estimation system (1) comprises a plurality of the occupancy estimation units (10) which are all in communication with the cloud server (13).

12. The PIR occupancy estimation system (1) according to claim 1, further comprising a plurality of additional sensors, comprising at least one of an audio sensor, a CO2 sensor, a Bluetooth device sensor, an infrared temperature sensor, an area temperature sensor, a humidity sensor, a light level sensor, and a light color sensor, working in conjunction with the PIR motion sensor (11).

## Patentansprüche

1. System (1) zur Schätzung der PIR-Belegung (Passiv-Infrarot-Belegung), das zum Schätzen einer Anzahl von Personen in einem Zielraum ausgestaltet und **dadurch gekennzeichnet ist, dass** es umfasst:
einen PIR-Bewegungssensor (11) mit einem Sichtfeld eines Gebiets, in dem die Präsenz von Personen erwartet werden, und der zum Ausgeben eines PIR-Signals ausgestaltet ist; und
eine Steuervorrichtung (12), die ausgestaltet ist, um das PIR-Signal zu empfangen, um eine Zusammenfassung der kleineren und größeren Bewegungsmuster der Personen in dem Sichtfeld zu erstellen und um einen Belegungsschätzwert entsprechend den kleineren Bewegungsmustern zu generieren,
wobei die Steuervorrichtung (12) ausgestaltet ist, um einen Algorithmus zur Verarbeitung des PIR-Signals vom PIR-Bewegungssensor (11) auszuführen, und der Algorithmus ausgestaltet ist, um das PIR-Signal in eine Mehrzahl von Frames zu zerlegen und um eine Transformation, die eine Zeit-Frequenz-Transformation oder eine Merkmals-Extraktions-Transformation umfasst, bezüglich der Mehrzahl von Frames durchzuführen,
wobei die Steuervorrichtung (12) ausgestaltet ist, um jedes der Mehrzahl von Frames durch ein unüberwachtes Clustering-Maschinen-Lernmodell des Algorithmus zu analysieren, um zwischen den kleineren und größeren Bewegungsmustern zu unterscheiden, wobei das größere Bewegungsmuster verworfen wird.

2. System (1) zur Schätzung der PIR-Belegung nach Anspruch 1, wobei der Algorithmus ausgestaltet ist, um ein Bandpassfilter zu verwendet, um das PIR-Signal zu filtern, um unerwünschte Verzerrungen und hochfrequentes Rauschen zu entfernen.

3. System (1) zur Schätzung der PIR-Belegung nach Anspruch 1, wobei die Mehrzahl von Frames mit einer Überlappung von 50% erzeugt werden.

4. System (1) zur Schätzung der PIR-Belegung nach Anspruch 1, wobei der Algorithmus entsprechend der Mehrzahl von Frames und einer Ausgabe der Transformation für jedes der Mehrzahl von Frames ausgestaltet ist, um statistische Merkmale aus jedem der Mehrzahl von Frames zu extrahieren und um die statistischen Merkmale zu einem Merkmalsvektor zu verketten.

5. System (1) zur Schätzung der PIR-Belegung nach Anspruch 4, wobei die statistischen Merkmale mindestens eines von einem Laplace-Spread-Parameter, einem Bereich zwischen den kleinsten und größten Samples in dem Frame, einer Nulldurchgangsrate, einer mittleren Durchgangsrate, einer Entropie, einem Bewegungswert, prozentualen positiven Werten, Perzentilwerten und einer Steigung umfassen.

6. System (1) zur Schätzung der PIR-Belegung nach Anspruch 4, wobei der Algorithmus ausgestaltet ist, um die Mehrzahl von Frames zwischen den größeren und den kleineren Bewegungsmustern zu unterscheiden und zu charakterisieren und um die Frames zu extrahieren, wo die kleineren Bewegungsmuster detektiert wurden.

7. System (1) zur Schätzung der PIR-Belegung nach Anspruch 4, wobei der Algorithmus entsprechend dem Merkmalsvektor ausgestaltet ist, um ein Maschinen-Lernmodell zu verwenden, um die Anzahl von Personen in dem Zielraum zu schätzen und um eine ungefähre Schätzung zu generieren.

8. System (1) zur Schätzung der PIR-Belegung nach Anspruch 7, wobei der Algorithmus ausgestaltet ist, um die ungefähren Schätzungen aus dem Maschinen-Lernmodell durch eine Stabilitäts- und Glättungsphase zu verarbeiten, um geglättete Schätzungen zu erzeugen und um den Belegungsschätzwert durch Klasseneinteilung der geglätteten Schätzungen zu erzeugen.

9. System (1) zur Schätzung der PIR-Belegung nach Anspruch 8, wobei der Algorithmus ausgestaltet ist, um eine Überwachungslogik auf die ungefähren oder geglätteten Schätzungen anzuwenden, um Anomalien und Randfälle zu eliminieren.

10. System (1) zur Schätzung der PIR-Belegung nach Anspruch 1, ferner umfassend einen Cloud-Server (13), der zum Speichern von Daten ausgestaltet ist, wobei die Steuervorrichtung (12) einen Transceiver in Kommunikation mit dem Cloud-Server (13) aufweist.

11. System (1) zur Schätzung der PIR-Belegung nach Anspruch 10, wobei der PIR-Bewegungssensor (11) und die Steuervorrichtung (12) eine Einheit (10) zur Schätzung der Belegung bilden, und das System (10) zur Schätzung der PIR-Belegung eine Mehrzahl der Einheiten (10) zur Schätzung der Belegung aufweist, die alle mit dem Cloud-Server (13) in Kommunikation stehen.

12. System (1) zur Schätzung der PIR-Belegung nach Anspruch 1, ferner umfassend eine Mehrzahl von zusätzlichen Sensoren, die mindestens einen von einem Audio-Sensor, einem CO₂-Sensor, einem Bluetooth-Gerätesensor, einem Infrarot-Temperatursensor, einem Raumtemperatursensor, einem Feuchtigkeitssensor, einem Lichtstärkesensor und einem Lichtfarbsensor, die zusammen mit dem PIR-Bewegungssensor (11) arbeiten.

## Revendications

1. Système d'estimation d'occupation PIR (infrarouge passif) (1), configuré pour estimer un nombre d'occupants dans un espace cible, et **caractérisé en ce qu'**il comprend:
un capteur de mouvement PIR (11) ayant un champ de vision constitué d'une zone dans laquelle on s'attend à ce que des occupants soient présents, et conçu pour délivrer un signal PIR; et
un appareil de commande (12) conçu pour recevoir le signal PIR afin de compiler un ensemble des comportements de mouvement mineur et majeur des occupants dans le champ de vision et de générer un compte d'estimation d'occupation selon le comportement de mouvement mineur,
dans lequel l'appareil de commande (12) est conçu pour exploiter un algorithme pour traiter le signal PIR provenant du capteur de mouvement PIR (11), et l'algorithme est conçu pour diviser le signal PIR en une pluralité de fenêtres et effectuer une transformation, comprenant une transformation temps-fréquence ou une transformation d'extraction de caractéristiques, sur la pluralité de fenêtres,
dans lequel l'appareil de commande (12) est conçu pour analyser chaque fenêtre de la pluralité de fenêtres par un modèle d'apprentissage automatique non supervisé/à segmentation de l'algorithme afin de faire la distinction entre les comportements de mouvement mineur et majeur, le comportement de mouvement majeur étant abandonné.

2. Système d'estimation d'occupation PIR (1) selon la revendication 1, dans lequel l'algorithme est conçu pour utiliser un filtre passe-bande pour filtrer le signal PIR afin d'éliminer de la polarisation et du bruit haute fréquence indésirables.

3. Système d'estimation d'occupation PIR (1) selon la revendication 1, dans lequel la pluralité de fenêtres sont générées avec un chevauchement de 50%.

4. Système d'estimation d'occupation PIR (1) selon la revendication 1, dans lequel, selon la pluralité de fenêtres et une sortie de la transformation pour chaque fenêtre de la pluralité de fenêtres, l'algorithme est conçu pour extraire des caractéristiques statistiques de chaque fenêtre de la pluralité de fenêtres et concaténer les caractéristiques statistiques en un vecteur de caractéristiques.

5. Système d'estimation d'occupation PIR (1) selon la revendication 4, dans lequel les caractéristiques statistiques comprennent au moins un élément parmi un paramètre d'étalement de Laplace, un intervalle entre les échantillons le plus petit et le plus grand dans la fenêtre, un taux de passage par zéro, un taux de passage par la moyenne, une entropie, un compte de mouvement, des valeurs de pourcentage de positifs, des percentiles et une pente.

6. Système d'estimation d'occupation PIR (1) selon la revendication 4, dans lequel l'algorithme est conçu pour faire la distinction et caractériser la pluralité de fenêtres entre les comportements de mouvement majeur et mineur et extraire la fenêtre dans laquelle les comportements de mouvement mineur sont détectés.

7. Système d'estimation d'occupation PIR (1) selon la revendication 4, dans lequel, selon le vecteur de caractéristiques, l'algorithme est conçu pour utiliser un modèle d'apprentissage automatique pour estimer le nombre d'occupants dans l'espace cible et générer une estimation approximative.

8. Système d'estimation d'occupation PIR (1) selon la revendication 7, dans lequel l'algorithme est conçu pour traiter les estimations approximatives provenant du modèle d'apprentissage automatique au moyen d'une phase de stabilité et de lissage afin de générer des estimations lissées et générer le compte d'estimation d'occupation au moyen du groupement par classe des estimations lissées.

9. Système d'estimation d'occupation PIR (1) selon la revendication 8, dans lequel l'algorithme est conçu pour appliquer une logique de supervision aux estimations approximatives ou lissées afin d'éliminer des anomalies et des cas limites.

10. Système d'estimation d'occupation PIR (1) selon la revendication 1, comprenant en outre un serveur en nuage (13) conçu pour stocker des données, dans lequel l'appareil de commande (12) comprend un émetteur-récepteur en communication avec le serveur en nuage (13).

11. Système d'estimation d'occupation PIR (1) selon la revendication 10, dans lequel le capteur de mouvement PIR (11) et l'appareil de commande (12) forment une unité d'estimation d'occupation (10), et le système d'estimation d'occupation PIR (1) comprend une pluralité de telles unités d'estimation d'occupation (10) qui sont toutes en communication avec le serveur en nuage (13).

12. Système d'estimation d'occupation PIR (1) selon la revendication 1, comprenant en outre une pluralité de capteurs supplémentaires, comprenant au moins un capteur parmi un capteur audio, un capteur de CO2, un capteur de dispositifs Bluetooth, un capteur de température infrarouge, un capteur de température de zone, un capteur d'humidité, un capteur de niveau de lumière et un capteur de couleur de lumière, fonctionnant conjointement avec le capteur de mouvement PIR (11).
